# EUROPEAN PATENT APPLICATION

(11) **EP 1 039 318 A2**
(43) Date of publication of application: **27.09.2000**
(21) Application number: 00106165.4
(22) Date of filing: 21.03.2000
(51) Int. Cl.: G02B 6/255

(54) **Method of permanently joining optical fibres characterised by strongly different glass transition points**

(30) Priority: 22.03.1999 IT TO990217
(71) Applicant: OTC Optical Technologies Center s.r.l., 10148 Torino (IT)
(72) Inventor: Braglia, Marco, 10134 Torino (IT)
(74) Representative: Riederer Freiherr von Paar zu Schönau, Anton

(57) **Abstract**

A method is described of permanently joining a first optical fibre (2), made of a glass having a low glass transition temperature, and a second optical fibre (9,10) made of a glass having a high glass transition temperature, whereby a glue (22) is applied between the facing end surfaces of said first and second optical fibres (2, 9, 10) and on the end parts of the fibres, adjacent to said surfaces. Then the glue is exposed to the action of a polymerisation radiation, applied so as to guarantee a uniform polarisation and a time-stable joint.

## Description

The present invention relates to the components for optical telecommunications networks and concerns in particular a method of permanently joining optical fibres characterised by a high melting point, such as the conventional, GeO₂ doped silica fibres, with low glass transition point fibres, such as for instance fluorides-based or chalcogenides-based fibres, or telluride glass fibres.

The issue of making permanent joints between optical fibres having very different glass transition temperatures arises for instance in the implementation of optical fibre amplifiers, that are increasingly used in the optical telecommunications networks to compensate signal attenuation.

The optical fibre amplifiers make use of optical fibres that are rare earth ions doped, and in particular Pr³⁺ ions doped, for amplifiers working at wavelengths within the so called "second transmission window", around 1,3 microns (µm), and Er³⁺ doped fibres for amplifiers working at wavelengths within the third transmission window, around 1,55 microns. These rare earth doped optical fibres are commonly known as "active fibres".

In some types of amplifiers these fibres are fabricated by using glasses based on materials different from silica, such as for instance halides based fibres (in particular fluorides) or chalcogenides based fibres or also fibres of telluride glasses, based on tellurium oxides. As a matter of fact, the halides based glasses (fluoride glasses) or the chalcogenides based glasses are the only ones exhibiting fluorescence when Er³⁺ ions doped, and thereby may be used for fabricating amplifiers operating in the second window, thus allowing the exploitation of the region characterised by practically zero dispersion of optical silica fibres conventionally used for the transmission lines; furthermore, when Er³⁺ ions doped for use within the third window, the fluoride glasses have an amplification band that is slightly larger and flatter than that of silica glasses and therefore they allow transmitting a higher number of channels without any gain equalisation problems.

Er³⁺ doped telluride glasses have in turn an amplification band that is much wider than that of silica glasses and fluoride glasses and additionally exhibit more uniform features over the whole amplification band. Nevertheless the above-mentioned non-silica glasses have glass transition temperatures T_{g} much lower (by a few hundred °C) than those of silica glasses; as a matter of fact, for such glasses T_{g} varies from about 250 °C to about 600 °C for fluoride or telluride glasses, depending on the composition, whereas for the silica glasses T_{g} is of the order of 1800 °C. It is therefore evident that to make permanent joints between the fibres of the amplifiers and those of the transmission lines, it is not possible to apply the splicing technique that guarantees a good quality and time constancy of the characteristics of the joints but it is necessary to make resort to the joining technique by gluing.

In this technique the ends of the fibre lengths to be joined are inserted into a respective guide element that allows performing their alignment, and are reciprocally locked through a drop of glue (typically epoxy resin), to be polymerised through an external, appropriate radiation.

The alignment position is recognised by the fact that the signal transmitted through the two fibre lengths is maximised. The guide elements may be of the type conventionally used to make mechanical connectors which allow it to easily keep the alignment condition during the gluing operation.

The joining technique by means of gluing and structures of mechanical connectors applicable also in such a technique are described for instance in the book "Fiber Optics Handbook For Engineers and Scientists" by F.C. Allard. See in particular chapter 3 "Fiber-optic splices, connectors, and couplers", by P. Morra and E. Vezzoni.

The known technique has a double drawback. First, the polymerisation from outside is rather inhomogeneous due to the impossibility of a uniform radiation at all the points of the region involved by the glue; secondly, the polymerisation starts from the outside. Both factors contribute to determine structural stresses. In time this may cause phenomena of resin deterioration also due to the pump and signal radiation passing through the core of the fibres: the result may be a weakening and de-structuring of the glue, which in turn contributes to the rise of structural stresses and may additionally cause a shift from the optimal alignment condition of the fibres and thereby an increase in the transmission losses of the joint.

According to the invention a joining method is instead provided that guarantees joints with uniform and time-stable features.

The method according to the invention is characterised in that the glue polymerisation is obtained by means of a radiation transmitted through the core of the fibres to be joined. The radiation is generally a UV or blue light radiation, as those commonly used for the polymerisation from the outside, and will be generated by an appropriate source which, in the case of implementation of joints between fibres of an optical amplifier, is connected for the time required by the polymerisation to one of the lengths or pigtails of fibre that, in case of use of the amplifier under operation conditions, carry to the same the pump radiation or the radiation to be amplified.

For a better clarification reference is made to the attached drawings, wherein:
- Figure 1 is a block diagram of an optical amplifier, and
- Figure 2 shows a device suitable for the execution of the method.

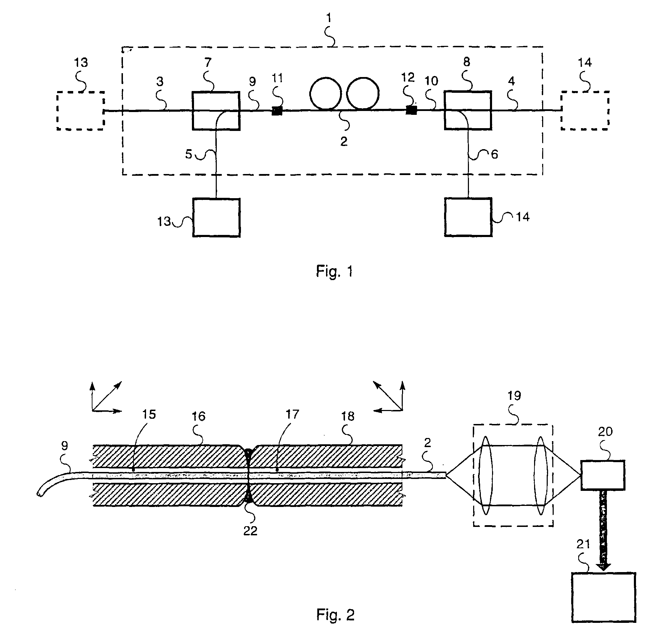

In Fig. 1, notation 1 indicates as a whole an optical fibre amplifier that, as known, is formed by a short length 2 (for instance a few meters) of an active optical fibre, i.e. a rare earth doped optical fibre (in particular an Er³⁺ or Pr³⁺ ions doped optical fibre, depending on whether operation within the second or the third transmission window is required), and by means for launching into the fibre 2 both a signal to be amplified and at least one pump signal at a wavelength different from that of the signal to be amplified, and for extracting the amplified signal. The signal to be amplified is forwarded to the amplifier 1 through a first conventional silica fibre 3 (i.e. a germanium oxide doped fibre), whereas the amplified signal is sent over a second conventional silica fibre 4. The pump signal may be injected at only one of the two ends of the active fibre 2, in the same propagation direction of the signal to be amplified or in the opposite direction (i.e. co-directional or counter-directional pumping) or at both ends of the active fibre 2 (i.e. bi-directional pumping). The drawing depicts the case of the bi-directional pumping. In said drawing there are shown further lengths 5, 6 of the optical fibre which allow, for the use of the amplifier under operation conditions, the connection of the amplifier 1 to the sources of the pump signals (not shown) and to the wavelength division couplers 7, 8 that allow launching into the active fibre 2 the signal to be amplified and the co-directional pump signal, and launching into the fibre 2 the counter-directional pump signal and extracting the amplified signal, respectively.

The couplers 7, 8 are in turn equipped with conventional optical fibre terminations for the connection at one end to the fibres 3, 5 or 4, 6 and at the other to the active fibre 2. The terminations for the connection to the active fibre 2 are denoted by 9, 10. As already said, it is necessary to resort to gluing whenever permanent joints are required between the active fibre 2 and the silica optical fibre of terminations 9, 10, i.e. between fibres whose glass transition temperatures differ by several hundred °C. The joints so obtained are denoted by 11, 12 in the drawing.

For such gluing operation the invention envisages that, after the deposition of a few drops of a glue on the end faces of the fibres to be joined, a UV radiation is sent into the core of one of the fibre lengths 3, 5 (for connection 11) or 4, 6 (for connection 12), said UV radiation being generated by appropriate sources 13, 14, that are temporarily connected to the involved fibres, namely fibres 5, 6 in the given example. It does not make any difference whether the fibre destined to the pump or the one destined to the signal is used. For this reason, sources 13, 14 are illustrated with dashed lines also in association with fibres 3, 4. In case of an amplifier with bi-directional pumping as in the drawing, it is also possible to simultaneously perform connections 11, 12 by simultaneously activating sources 13, 14.

The polymerisation times and the power to be applied depend on the resin being employed. For instance, for the resin available on the market under the trade name LUXTRAC LCR 200, the times may vary from a few ten seconds to a few minutes.

The polymerisation radiation propagating in the fibre core reaches the glue drops causing their polymerisation starting from the most internal zone, facing the core of the involved fibres. Under these conditions first the zone of the fibre core is locked, and then the polymerisation variations are reduced, thereby reducing any possible structural stress.

In any case these stresses occur along the outside surface of the cladding of the fibre which is not radiated directly during its operation and therefore is less subjected to ageing due to the radiation propagating in the fibre. Thus, the joint will be time-stable, and the amplifier will not be subjected to a loss increase due to a misalignment between the fibres.

A device suitable for the application of the method according to the invention is depicted in Fig.2. The ends of the fibres to be joined (for instance fibres 2 and 9 of Fig.1) are inserted into axial holes 15, 17 of respective connectors ferrules 16, 18, where they are locked for instance by means of an adhesive (not shown), as it is usual in the connectors technique and described in detail in the above-mentioned handbook. The end faces of the ferrules are so shaped as to allow the substantial contact between the ends of the fibres. Ferrules 16, 18 are associated for instance to micro-manipulators (not shown) which allow the control of their positioning in a three-dimension space, as indicated by the Cartesian co-ordinate system shown above the same ferrules, so as to bring about the correct alignment of the fibres. As an exemplary embodiment, it has been assumed in the drawing that, in order to detect such alignment, a radiation is provided which can be later used for the polymerisation, said radiation being collected Through an appropriate optical system 19 and sent to a detector 20, connected to a measurement system 21, which allows analysing the signal power received during the position adjustments of ferrules 16, 18. Once the position of the ferrules has been detected corresponding to the max. power received by the detector (thus to the optimum alignment position of the fibres), the glue 22 is applied in the interstice between the two ferrules, and the source 13 of the polarisation radiation is activated for the required time.

Obviously, according to this arrangement, the ferrules 16, 18 will become an integral part of joints 11, 12 (Fig.1) and shall have to be adequately locked to an appropriate support, for instance the same on which the set of the amplifier 1 is mounted, as in the exemplary embodiment described herein.

It is evident that what has been described is only given as a non-limiting example and that variations and modifications are possible without leaving the scope of the invention. In particular, even if the invention has been described by making reference to the implementation of optical fibre amplifiers, it is evident that the present invention may be applied whenever it is required to permanently join fibres having strongly different glass transition temperatures.

## Claims

1. Method of permanently joining a first optical fibre (2), made of a glass having a low glass transition temperature, and a second optical fibre (9,10) made of a glass having a high glass transition temperature, whereby a glue is applied between the facing end surfaces of said first and second optical fibres (2, 9, 10) and on the end parts of the fibres, adjacent to said surfaces, and said glue is exposed to the action of a polymerisation radiation, characterised in that said polymerisation radiation is a radiation that propagates through the core of said first and second optical fibres (2, 9, 10), so that the polymerisation starts from an internal zone of the glue, adjacent to the core of said first and second optical fibres (2, 9, 10).

2. Method according to claim 1, characterised in that said first optical fibre (2) is an active optical fibre of a non silica based glass and said second optical fibre (9, 10) is an optical silica fibre.

3. Method according to claim 2, characterised in that said active optical fibre (2) is chosen among: halides based optical fibres, chalcogenides based optical fibres, tellurium oxide based glass optical fibres.

4. Method according to any of the claims 1 to 3, characterised in that said first and second optical fibres (2, 9, 10) respectively are the active fibre of an optical fibre amplifier (1) and a optical fibre termination associated to an optical coupler (7) destined to send into the optical amplifier (1) a pump signal and a signal to be amplified or to an optical coupler (8) destined to send a pump signal into the optical amplifier (1) when from said optical amplifier (1) an amplified signal is extracted.

5. Method according to claim 4, characterised in that said polymerisation radiation is generated by a source (13, 14) which is connected to an additional optical fibre (3-6), that is destined to convey to said coupler (7, 8) the signal to be amplified or the pump signal or destined to convey the amplified signal at the amplifier (1) output.

6. Method according to claim 4 or 5, whereby said optical amplifier (1) is an amplifier (1) with bi-directional pumping through a pair of couplers (7, 8), each of them associated to a length of said optical fibre (9, 10), characterised in that said polymerisation radiation is generated by a pair of sources (13, 14), each of them capable of sending the radiation into one of said lengths of said second optical fibre (9, 10) through the respective coupler (7, 8).
